# EUROPEAN PATENT SPECIFICATION

(11) **EP 2 124 282 B1**
(45) Date of publication and mention of the grant of the patent: **22.05.2013**
(21) Application number: 08711295.9
(22) Date of filing: 14.02.2008
(51) Int. Cl.: H01M 8/06, C01B 3/38, H01M 8/04, H01M 8/12

(54) **REFORMER SYSTEM, FUEL CELL SYSTEM, AND THEIR OPERATION METHOD**
REFORMER-SYSTEM, BRENNSTOFFZELLENSYSTEM UND BETRIEBSVERFAHREN DAFÜR
SYSTÈME DE REFORMEUR, SYSTÈME DE PILE À COMBUSTIBLE ET LEUR PROCÉDÉ DE FONCTIONNEMENT

(30) Priority: 16.02.2007 JP 2007036705
(43) Date of publication of application: 25.11.2009
(73) Proprietor: JX Nippon Oil & Energy Corporation, Chiyoda-ku Tokyo 100-8162 (JP)
(72) Inventor: ISHIDA, Tomotaka, Yokohama-shi Kanagawa 231-0815 (JP)
(74) Representative: Grünecker, Kinkeldey, Stockmair & Schwanhäusser
(86) International application number: PCT/JP2008/052456
(87) International publication number: WO 2008/099893

(56) References cited:
- JP-A- 11 079 702
- JP-A- 2004 039 552
- JP-A- 2004 311 337
- JP-A- 2005 302 631
- JP-A- 2006 076 839

## Description

### Technical Field

The present invention relates to a reformer system provided with a reformer that generate a reformed gas by reforming a source fuel through the use of a reforming catalyst, a fuel cell system additionally provided with a solid oxide fuel cell using the reformed gas as a fuel, and an operation method of the fuel cell system.

### Background Art

As a conventional fuel cell system, there is known one provided with fuel electrode nitrogen supply equipment for feeding nitrogen stored in a liquid nitrogen storage tank to a fuel electrode of a fuel cell at the stop of power generation in a solid oxide fuel cell (see, for example, Patent Document 1). According to such fuel cell system, at the stop of power generation in a solid oxide fuel cell, it is possible to prevent the swelling of nickel and the like used for a fuel electrode in the fuel cell, caused by oxidation and as the result, becomes possible to avoid damage of an electrolyte made up of yttria-stabilized zirconia and the like.
Patent Document 1: JP 2004-220942 A

### Disclosure of the Invention

### Problems to be Solved by the Invention

In the aforementioned conventional fuel cell system, however, since it is necessary to provide a liquid nitrogen storage tank or fuel electrode nitrogen supply equipment, the structure becomes complicated.

Therefore, the present invention is achieved in consideration of such circumstances, and aims at providing a reformer system, a fuel cell system, and an operation method of the fuel cell system, which make it possible to avoid damage given to a fuel cell at the stop of power generation in a solid oxide fuel cell, with a simple constitution.

### Means for Solving the Problems

In order to achieve the above purpose, the reformer system according to the present invention is a reformer system provided with a reformer generating a reformed gas used as a fuel for a solid oxide fuel cell by reforming a source fuel through the use of a reforming catalyst, wherein the system is provided with a source fuel introducing means for introducing a source fuel into the reforming catalyst, a heating means for heating the reforming catalyst, an air introducing means for introducing air into the reforming catalyst, a temperature detecting means for detecting the temperature of the reforming catalyst, and a control means for reducing the amount of the source fuel introduced to the source fuel introducing means and performing, before the temperature detected by the temperature detecting means falls to an unreformed gas generation temperature, at least one of the control over the heating means to heat the reforming catalyst and the control over the air introducing means to introduce air into the reforming catalyst, at the stop of power generation in a fuel cell.

Further, the fuel cell system according to the present invention is a fuel cell system provided with a reformer generating a reformed gas by reforming a source fuel through the use of a reforming catalyst, and a solid oxide fuel cell using the reformed gas as a fuel, wherein the system is provided with a source fuel introducing means for introducing a source fuel into the reforming catalyst, a heating means for heating the reforming catalyst, an air introducing means for introducing air into the reforming catalyst, a temperature detecting means for detecting the temperature of the reforming catalyst, and a control means for reducing the amount of the source fuel introduced to the source fuel introducing means and performing, before the temperature detected by the temperature detecting means falls to an unreformed gas generation temperature, at least one of the control over the heating means to heat the reforming catalyst and the control over the air introducing means to introduce air into the reforming catalyst, at the stop of power generation in a fuel cell.

Furthermore, the operation method of a fuel cell system according to the present invention is an operation method of a fuel cell system provided with a reformer that generates a reformed gas by reforming a source fuel through the use of a reforming catalyst, and a solid oxide fuel cell that uses the reformed gas as a fuel, wherein the method reduces the amount of source fuel introduced to the reforming catalyst and, before the temperature of the reforming catalyst falls to an unreformed gas generation temperature, performs at least one of heating the reforming catalyst and introducing air into the reforming catalyst, at the stop of the power generation in the fuel cell.

In these reformer system, fuel cell system, and operation method of the fuel cell system, at the stop of power generation in a solid oxide fuel cell, the amount of source fuel introduced to the reforming catalyst of the reformer is reduced, and, at this time, before the temperature of the reforming catalyst falls to an unreformed gas generation temperature, at least one of heating the reforming catalyst and introducing air into the reforming catalyst is performed. This raises the reforming catalyst temperature and therefore, the generation of an unreformed gas is prevented at the stop of the power generation in the solid oxide fuel cell, and a reformed gas is supplied to the fuel cell. Accordingly, at the stop of power generation in the solid oxide fuel cell, even if a liquid nitrogen storage tank and fuel electrode nitrogen supply equipment are not provided unlike the conventional ways, it is possible, with a simple constitution, to avoid damage on the fuel cell.

In the reformer system according to the present invention, the control means preferably makes the heating means change the amount of heating the reforming catalyst depending on the reduction in the amount of the source fuel introduced by the source fuel introducing means. Further, in the reformer system according to the present invention, the control means preferably makes the air introducing means change the amount of air to be introduced depending on the reduction in the amount of the source fuel introduced by the source fuel introducing means. These can raise the temperature of the reforming catalyst to surely prevent the generation of the unreformed gas.

In the reformer system according to the present invention, the heating means is preferably a heater, a burner or a burner off-gas. The heater, burner or burner off-gas can heat the reforming catalyst to raise the temperature of the reforming catalyst surely and easily.

In the reformer system according to the present invention, the temperature detecting means preferably detects the temperature of the reforming catalyst on the central axis line of the flow path of the source fuel introduced by the source fuel introducing means. This makes it possible to detect accurately the temperature of a part where the reforming reaction of the source fuel mainly occurs in the reforming catalyst.

### Effect of the Invention

According to the present invention, at the stop of power generation in the solid oxide fuel cell, damage on the fuel cell can be avoided with a simple constitution.

### Brief Description of the Drawings

Fig. 1 is a front view of one embodiment of the fuel cell system according to the present invention.
Fig. 2 is a plan view of the fuel cell system shown in Fig. 1.
Fig. 3 is a flow chart showing an operation method when the fuel cell system shown in Fig. 1 is going to be in cold standby mode.
Fig. 4 is a flow chart showing an operation method when the fuel cell system shown in Fig. 1 is going to be in hot standby mode.
Fig. 5 is a plan view of another embodiment of the fuel cell system according to the present invention.

### Description of Reference Numerals

1: fuel cell system, 2: reformer, 2a: reforming catalyst, 3: fuel cell, 4: source fuel introducing device (source fuel introducing means), 5: heater (heating means), 6: air introducing device (air introducing means), 7 : temperature detector (temperature detecting means), 8: cell temperature detector (cell temperature detecting means), 9: control device (control means), 10: reformer system, L1: central axis line of source fuel flow path, L2: central axis line of air flow path

### Best Modes for Carrying Out the Invention

Hereinafter, preferred embodiments of the present invention will be described in detail with reference to the drawings.

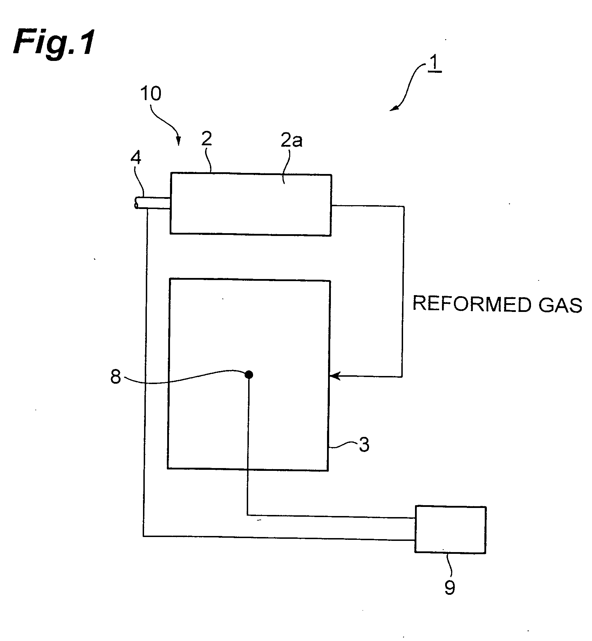

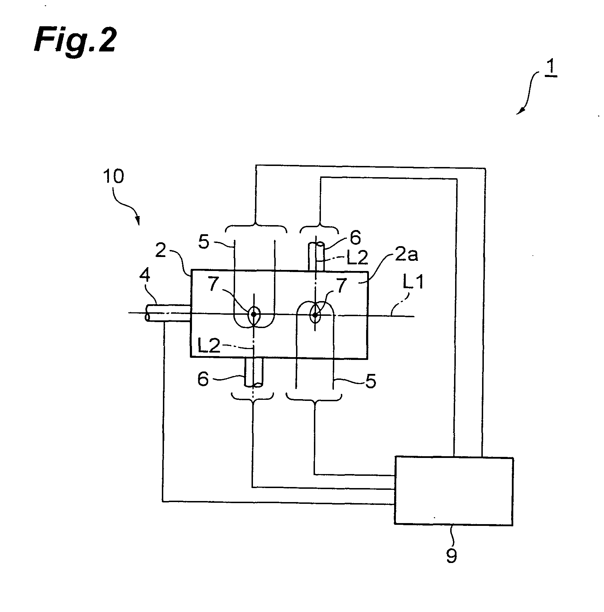

As shown in Figs. 1 and 2, a fuel cell system 1 is provided with a reformer 2 for generating a reformed gas by reforming a source fuel through the use of a reforming catalyst 2a, and a solid oxide fuel cell 3 that uses the reformed gas as a fuel.

The reformer 2 subjects the source fuel and steam (water) to a steam reforming reaction through the use of the reforming catalyst 2a to generate a reformed gas containing hydrogen. Since the steam reforming reaction is an endothermal reaction, the reformer 2 utilizes exhaust heat of the fuel cell 3 for the steam reforming reaction. As the reforming catalyst 2a, catalysts known as a steam reforming catalyst can be used. That is, examples of the steam reforming catalyst include ruthenium-based catalysts and nickel-based catalysts.

The source fuel can suitably be selected and used from hydrocarbon-based fuels known as the raw material of a reformed gas in the field of solid oxide fuel cells, that is, compounds containing carbon and hydrogen in a molecule (other elements such as oxygen may also be contained), or mixtures thereof, for example, compounds containing carbon and hydrogen in a molecule such as hydrocarbons, alcohols, and the like. More specifically, they include hydrocarbons such as methane, ethane, propane, butane, natural gas, LPG (liquefied petroleum gas), city gas, gasoline, naphtha, kerosene and light oil, alcohols such as methanol and ethanol, ethers such as dimethyl ether, and the like. Among these, kerosene and LPG are preferable because they are easily obtainable. Further, since kerosene and LPG are storable independently, they are useful in areas where the line of city gas is not widespread. In addition, solid oxide fuel cells utilizing kerosene or LPG are useful as an emergency power source.

The fuel cell 3 generates power by means of multiple cells called SOFC (Solid Oxide Fuel Cells). The cell is constituted by arranging an electrolyte composed of a solid oxide between a fuel electrode and an air electrode. The electrolyte is composed, for example, of yttria-stabilized zirconia (YSZ), which conducts oxide ions at a temperature of 800°C to 1000°C. The fuel electrode consists, for example, of a mixture of nickel and YSZ, by which oxide ions and hydrogen in the reformed gas are reacted to generate electrons and water. The air electrode is composed, for example, of lanthanum strontium manganite, by which oxygen in air and electrons are reacted to generate oxide ions.

The fuel cell system 1 is provided with a source fuel introducing device (source fuel introducing means) 4 for introducing a source fuel and steam (water) into the reforming catalyst 2a, heaters (heating means) 5 for heating the reforming catalyst 2a, air introducing devices (air introducing means) 6 for introducing air into the reforming catalyst 2a, and an air introducing device for a cathode (air introducing means for a cathode) (not shown) for introducing air into a cathode (air electrode). The source fuel introducing device 4 has a source fuel introducing pipe for introducing a source fuel and steam, an introduction amount regulating valve for regulating the introduction amount of the source fuel and steam, and the like. Respective air introducing devices 6 and the air introducing device for a cathode have an air introducing pipe for introducing air, an introduction amount regulating valve for regulating an air introducing amount, and the like. The heater 5 is, for example, a ceramic heater buried in the reforming catalyst 2a.

Further, the fuel cell system 1 is provided with temperature detectors (temperature detecting means) 7 for detecting the temperature of the reforming catalyst 2a, a temperature detector 8 for detecting the cell temperature of the fuel cell 3, and a control device (control means) 9 for controlling the whole system. Temperature detectors 7, 8 are, for example, thermocouples. The temperature measuring junction of respective temperature detectors 7 is disposed, between a heater 5 and an air introducing pipe of the air introducing device 6 that faces with each other along a direction approximately perpendicular to a central axis line (the central axis line of a flow path of the source fuel introduced by the source fuel introducing device 4) L1, on the intersection point of the central axis line L1 and a central axis line (the central axis line of a flow path of the air introduced by the air introducing device 6) L2. That is, respective temperature detectors 6 are disposed so as to correspond to the heater 5 and the air introducing device 6 facing with each other.

Meanwhile, the reformer 2, the source fuel introducing device 4, the heater 5, the air introducing device 6, the temperature detector 7 and the controlling device 9 constitute the reformer system 10.

Next, the operation method of the fuel cell system 1 will be described.

### [When going into cold standby mode]

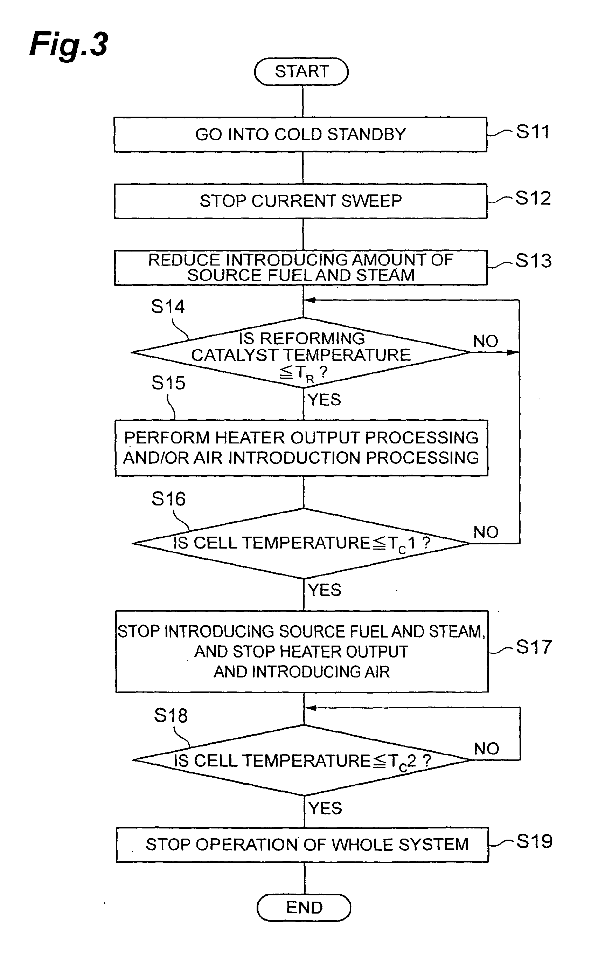

The operation method of the fuel cell system 1 when going into cold standby mode will be described with reference to Fig. 3. Meanwhile, the "cold standby mode" means that the operation of the fuel cell system 1 is completely stopped and, that the fuel cell system 1 stands by in a state in which the cell of the fuel cell 3 is at room temperature. The cold standby mode is adopted in such a case where the stop time of the power generation in the fuel cell 3 is comparatively long, because the start-up of the fuel cell system 1 needs a long time.

As shown in Fig. 3, first, the control device 9 commands cold standby mode (Step S11) to thereby stop current sweep from the fuel cell 3 (Step S12). That is, the control device 9 controls the fuel cell 3 to stop the power generation in the fuel cell 3. Next, the control device 9 controls the source fuel introducing device 4 to thereby reduce the introduction amount of the source fuel and steam into the reforming catalyst 2a (Step S13). Here, the gradual reduction in the introduction amount of the source fuel and steam is started. As the result, the cell temperature of the fuel cell 3 and the temperature of the reforming catalyst 2a begin to fall.

When the gradual reduction in the introduction amount of the source fuel and steam is started, the control device 9 determines whether or not the temperature of the reforming catalyst 2a detected by respective temperature detectors 7 is not more than T_{R} (Step S14). T_{R} is a temperature between the unreformed gas generation temperature and the temperature of the reforming catalyst 2a at the rated operation, and for example, when the source fuel is kerosene, it is a temperature of 400°C to 700°C. T_{R} is suitably set every temperature detector 7. Meanwhile, the unreformed gas generation temperature means a temperature at which the source fuel is not completely reformed by the reforming catalyst 2a and hydrocarbon gas having two or more carbons (unreformed gas) that could damage the cell of the fuel cell 3 begin to be generated and be mixed with the reformed gas, and is previously set depending on the introduction amount of fuel. Incidentally, carbon monoxide contained in the reformed gas reacts with oxide ions at the fuel electrode to form electrons and carbon dioxide.

Then, when the temperature of the reforming catalyst 2a detected by respective temperature detectors 7 is not more than T_{R}, the control device 9 executes at least one of a heater output processing and a air introduction processing below (Step S 15). Meanwhile, whether either of the heater output processing alone, the air introduction processing alone, and both of heater output processing and air introduction processing is executed is determined on a case-by-case basis so as to give the optimal result from the standpoint of economical efficiency, response property of the temperature rise of the reforming catalyst 2a, and the like. As one example, in an initial stage where the temperature of the reforming catalyst 2a is relatively high, an air introduction processing is performed to realize the autothermal reforming (ATR), and, in a stage where the temperature of the reforming catalyst 2a falls to a prescribed temperature or less, both of the heater output processing and the air introduction processing are performed to include the assist by the heater 5. Afterward, the heater output processing alone is performed while taking the temperature of the reforming catalyst 2a into consideration, or both the heater output processing and the air introduction processing are continued while taking the output control into consideration. The above processing at Step S 15 is the same as the processing at Step S25 in hot standby mode described later.

In the heater output processing, the control device 9 controls a heater 5 corresponding to the temperature detector 7 that detected a temperature of T_{R} or less, and the heater 5 heats the reforming catalyst 2a to raise the temperature of the reforming catalyst 2a. When the heating of the reforming catalyst 2a is started, the control device 9 determines whether or not the temperature of the reforming catalyst 2a detected by the temperature detector 7 is a prescribed temperature or less. When the temperature of the reforming catalyst 2a is a prescribed temperature or less, the control device 9 directs to increase the output of the heater 5. For the prescribed temperature, multiple levels are set as a temperature higher than one that allows the unreformed gas to generate, depending on the gradually reducing introduction amount of the source fuel and steam, and the control device 9 changes the output of the heater 5 every time the temperature falls to respective prescribed temperatures or less. As described above, the control device 9 directs the heater 5 to change the heating amount to the reforming catalyst 2a depending on the reduction in the amount of the source fuel introduced to the source fuel by the source fuel introducing device 4. This can raise the temperature of the reforming catalyst 2a and surely prevent the generation of the unreformed gas.

In the air introduction processing, the control device 9 controls an air introducing device 6 corresponding to the temperature detector 7 that detected a temperature of T_{R} or less, and the air introducing device 6 starts the introduction of air into the reforming catalyst 2a. This can easily raise the temperature of the reforming catalyst 2a. That is, the air introducing device 6 raises the temperature of the reforming catalyst 2a by introducing air into the reforming catalyst 2a. Thus, at the rated operation of the fuel cell 3, the source fuel introducing device 4 introduces the source fuel and water into the reforming catalyst 2a to realize an effective steam reforming reaction, and, at the stop of the power generation in the fuel cell 3, the air introducing device 6 introduces air into the reforming catalyst 2a to realize ATR.

When the introduction of the air into the reforming catalyst 2a is started, the control device 9 determines whether or not the temperature of the reforming catalyst 2a detected by the temperature detector 7 is a prescribed temperature or less. When the temperature of the reforming catalyst 2a is the prescribed temperature or less, the control device 9 executes a processing of increasing O₂/C (the combustion ratio of the introduced fuel). For the prescribed temperature, multiple levels are set as a temperature higher than one that allows the unreformed gas to generate, depending on the gradually reducing introduction amount of the source fuel and steam, and the processing of increasing O₂/C is executed every time when the temperature falls to respective temperatures or less. Meanwhile, the processing of increasing O₂/C means, for example, a processing in which the air introducing device 6 increases the air introducing amount into the reforming catalyst 2a. In this case, the control device 9 directs the air introducing device 6 to change the air introducing amount depending on the reduction in the amount of the source fuel introduced by the source fuel introducing device 4. This can raise the temperature of the reforming catalyst 2a, and surely prevent the generation of the unreformed gas.

During the execution of at least one of the heater output processing and the air introduction processing, the control device 9 determines whether or not the cell temperature of the fuel cell 3 detected by the temperature detector 8 is T_{C}1 or less (Step S16). T_{C}1 is a temperature at which the fuel cell 3 does not need the reformed gas as a reducing gas for the fuel electrode, and is from 100°C to 500°C, preferably from 100°C to 300°C, and more preferably from 100°C to 200°C. Then, when the cell temperature detected by the temperature detector 8 is T_{C}1 or less, the control device 9 controls a device that is operating among the source fuel introducing device 4, and the heater 5 and the air introducing device 6, and then at the same time when the introduction of the source fuel and steam is stopped by the source fuel introducing device 4, the output of the heater 5 and the introduction of air by the air introducing device 6 are stopped (Step S 17).

Subsequently, the control device 9 determines whether or not the cell temperature of the fuel cell 3 detected by the temperature detector 8 is T_{C}2 or less (Step S 18). The T_{C}2 is a temperature at which the fuel cell 3 does not need the introduction of air into the cathode, and is preferably form 50°C to 200°C, more preferably from 50°C to 100°C. And, when the cell temperature detected by the temperature detector 8 is T_{C}2 or less, the control device 9 stops the operation of the whole system (Step S 19), and the fuel cell system 1 goes into the cold standby mode.

### [When goes into hot standby mode]

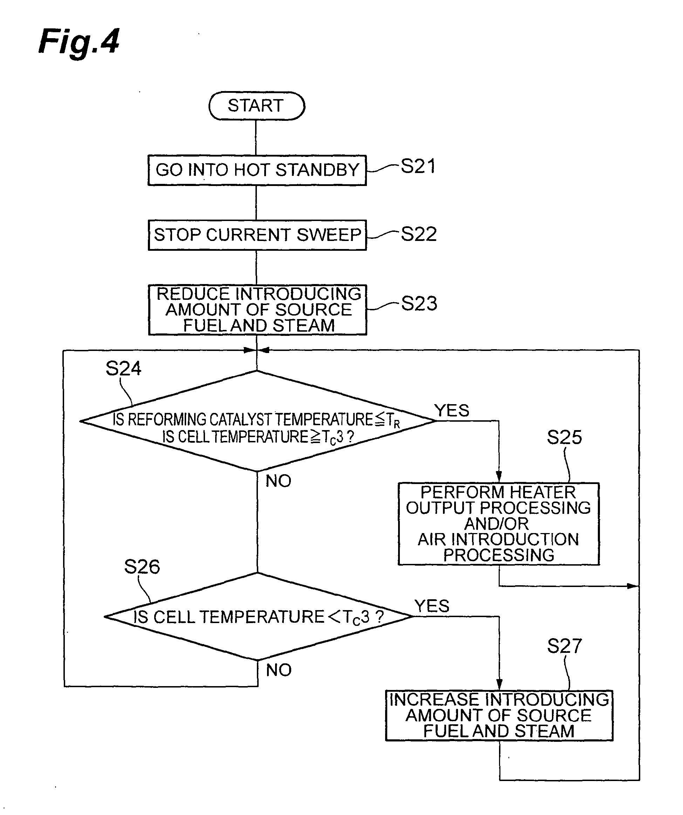

The operation method of the fuel cell system 1 when goes into hot standby mode will be described with reference to Fig. 4. Meanwhile, the "hot standby mode" means that the power generation in the fuel cell 3 is stopped and, that the fuel cell system 1 stands by in a state where the cell temperature of the fuel cell 3 is an operative temperature. The hot standby mode is adopted when the stop time of the power generation in the fuel cell 3 is comparatively short, because a long time is not needed for starting the fuel cell system 1.

As shown in Fig. 4, firstly, the control device 9 gives a hot standby command (Step S21) to stop the current sweep from the fuel cell 3 (Step S22). That is, the control device 9 controls the fuel cell 3 to stop the power generation in the fuel cell. Next, control device 9 controls the source fuel introducing device 4 to reduce the amount of the source fuel and steam introduced to the reforming catalyst 2a (Step S23). Here, the introduction amount of the source fuel and steam is reduced by a prescribed amount.

And, the control device 9 determines whether or not such conditions are fulfilled that the temperature of the reforming catalyst 2a detected by respective temperature detectors 7 is T_{R} or less, and that the cell temperature of the fuel cell 3 detected by the temperature detector 8 is T_{C}3 or more (Step S24). T_{C}3 is an operative temperature of the cell and, for example, when the electrolyte is consisting of YSZ, is a temperature of 800°C to 1000°C, at which YSZ conducts oxide ions.

As the result of the determination processing at Step S24, when the condition is fulfilled, in order to prevent the generation of the unreformed gas in the reformer 2, the control device 9 executes at least one of the aforementioned heater output processing and air introduction processing (Step S25) to return to the determination processing at Step S24. On the other hand, as the result of determination processing at Step S24, when the condition is not fulfilled, the control device 9 determines whether or not the cell temperature of the fuel cell 3 detected by the temperature detector 8 is less than T_{C}3 (Step S26).

As the result of the determination processing at Step S26, when the cell temperature of the fuel cell 3 is less than T_{C}3, in order to maintain the cell temperature to the operative temperature, the control device 9 controls the source fuel introducing device 4, and the source fuel introducing device 4 increases the introduction amount of the source fuel and steam to the reforming catalyst 2a (Step S27) to return to the determination processing at Step S24. Here, the introduction amount of the source fuel and steam is increased by a prescribed amount reduced in the processing at Step S23, which is less than the prescribed amount. On the other hand, as the result of the determination processing at Step S26, when the cell temperature of the fuel cell 3 is T_{C}3 or more, the flow returns to the determination processing at Step S24.

In this way, the reformed gas supplied from the reformer 2 to the fuel cell 3 is burned in a combustion chamber of the fuel cell 3, and the fuel cell system 1 goes into the hot standby mode.

As described above, in the reformer system 10, the fuel cell system 1, and the operation method thereof, at the stop of the power generation in the fuel cell 3, the introduction amount of the source fuel to the reforming catalyst 2a of the reformer 2 is reduced. At this time, before the temperature of the reforming catalyst 2a falls to an unreformed gas generation temperature, at least one of the heating of the reforming catalyst 2a and the air introduction into the reforming catalyst 2a is performed. This raises the temperature of the reforming catalyst 2a, and at the stop of the power generation in the fuel cell 3, the generation of the unreformed gas is prevented and thus, the reformed gas is supplied to the fuel cell 3. Accordingly, at the stop of the power generation in the fuel cell 3, it is possible to avoid damage on the fuel cell 3 with a simple constitution.

The temperature detector 7 detects the temperature of the reforming catalyst 2a on the central axis line L1. As the result, the temperature of a portion where the reforming reaction mainly occurs on the reforming catalyst 2a can accurately be detected.

The present invention is not limited to the above-described embodiments.

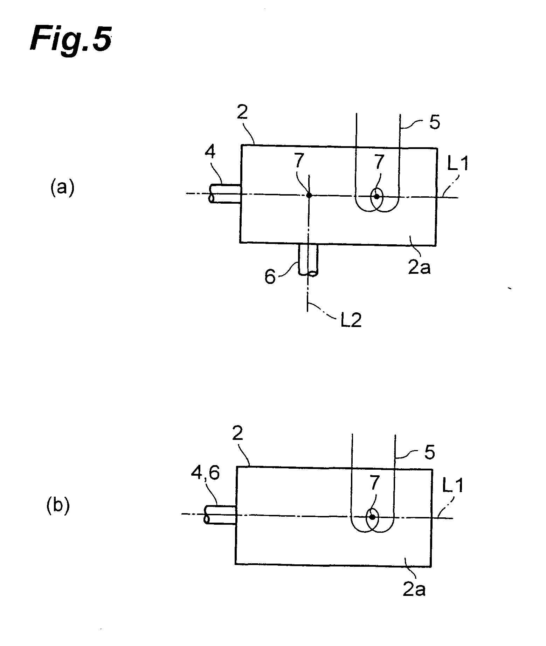

For example, as shown in Fig. 5(a), the heater 5 and the air introducing device 6 may be one, respectively. Further, as shown in Fig. 5(b), the air introducing device 6 may use the source fuel introducing pipe of the source fuel introducing device 4 as the air introducing pipe. Meanwhile, a burner or a burner off-gas pipe may be adopted in place of the heater 5 to heat the reforming catalyst 2a. A burner or burner off-gas also can surely and easily raise the temperature of the reforming catalyst 2a by heating the reforming catalyst 2a, in the same way as the heater 5.

Further, in the fuel cell system 1, when going into the cold standby mode, it is also possible to lower the output to an arbitrary partial load before the stop processing of the current sweep (Step S12), to execute the stop processing of the current sweep (Step S12), and to execute the stop process of the cold standby mode as was described using Fig. 3. On this occasion, the electric power generated before executing the stop processing of the current sweep (Step S12), for example, may be stored in a capacitor, or consumed by a loading device.

At the rated operation of the fuel cell 3, the reformer 2 may be used to realize ATR or a partial oxidation reforming reaction. In these cases, too, by reducing the amount of the source fuel introduced to the reforming catalyst 2a of the reformer 2, and raising the temperature of the reforming catalyst 2a before falling to the unreformed gas generation temperature, it is possible to prevent the generation of the unreformed gas with a simple constitution at the stop of the power generation in the fuel cell 3 and to avoid damage on the fuel cell 3. Meanwhile, in these cases, as the reforming catalyst 2a, catalysts known as an autothermal reforming catalyst or a partial oxidation reforming catalyst may be used. That is, examples of the autothermal reforming catalyst include rhodium-based catalysts, and examples of the partial oxidation reforming catalyst include platinum-based catalysts.

Further, for the fuel cell system 1, known constituents of an indirect internal type SOFC may appropriately be disposed, if required. Specific examples thereof include a vaporizer for vaporizing liquid, boosting means such as a pump, a compressor and blower for pressurizing various kinds of fluids, a flow amount adjusting means or a flow path interrupt/switching means such as a valve for adjusting the flow amount of liquid or for interrupting/switching the flow of a fluid, a heat exchanger for performing heat exchange/heat recovery, a condenser for condensing gas, a heating/thermal insulation means for externally heating various kinds of devices with steam and the like, a storage means of hydrocarbon-based fuels and burnable materials, an air or electric system for instrumentation, a signal system for control, a control device, an electric system for output and power, and the like.

### Industrial Applicability

According to the present invention, it is possible to avoid damage on a fuel cell at the stop of power generation in a solid oxide fuel cell, with a simple constitution.

## Claims

1. A reformer system provided with a reformer for generating a reformed gas used as a fuel of a solid oxide fuel cell by reforming a source fuel through the use of a reforming catalyst, comprising:
a source fuel introducing means for introducing the source fuel into the reforming catalyst,
a heating means for heating the reforming catalyst,
an air introducing means for introducing air into the reforming catalyst,
a temperature detecting means for detecting the temperature of the reforming catalyst,
a control means for reducing the amount of the source fuel introduced to the source fuel introducing means and performing, before the temperature detected by the temperature detecting means falls to an unreformed gas generation temperature, at least one of control over the heating means to heat the reforming catalyst and control over the air introducing means to introduce air into the reforming catalyst, at the stop of power generation in a fuel cell.

2. The reformer system according to claim 1, wherein the control means directs the heating means to change heating amount to the reforming catalyst depending on reduction in the amount of the source fuel introduced by the source fuel introducing means.

3. The reformer system according to claim 1, wherein the control means directs the air introducing means to change introduction amount of the air depending on reduction in the amount of the source fuel introduced by the source fuel introducing means.

4. The reformer system according to claim 1, wherein the heating means is a heater, a burner or a burner off-gas.

5. The reformer system according to claim 1, wherein the temperature detecting means detects the temperature of the reforming catalyst on a central axis line of a flow path of the source fuel introduced by the source fuel introducing means.

6. A fuel cell system provided with a reformer for generating a reformed gas by reforming a source fuel through the use of a reforming catalyst, and an solid oxide fuel cell using the reformed gas as a fuel, comprising:
a source fuel introducing means for introducing the source fuel into the reforming catalyst,
a heating means for heating the reforming catalyst,
an air introducing means for introducing air into the reforming catalyst,
a temperature detecting means for detecting the temperature of the reforming catalyst, and
a control means for reducing the amount of the source fuel introduced to the source fuel introducing means and performing, before the temperature detected by the temperature detecting means falls to an unreformed gas generation temperature, at least one of control over the heating means to heat the reforming catalyst and control over the air introducing means to introduce air into the reforming catalyst, at the stop of power generation in a fuel cell.

7. An operation method of a fuel cell system provided with a reformer for generating a reformed gas by reforming a source fuel by a reforming catalyst, and a solid oxide fuel cell using the reformed gas as a fuel,
wherein at the stop of power generation in the fuel cell, the amount of the source fuel introduced into the reforming catalyst is reduced, and at least one of heating the reforming catalyst and introducing air into the reforming catalyst is performed before the temperature of the reforming catalyst falls to an unreformed gas generation temperature.

## Patentansprüche

1. Reformersystem bereitgestellt mit einem Reformer zur Erzeugung eines reformierten Gases, welches als ein Brennstoff einer Festoxidbrennstoffzelle verwendet wird, durch Reformieren eines Ausgangsbrennstoffes durch die Verwendung eines Reformierkatalysators, umfassend:
eine Ausgangsbrennstoffeinführeinrichtung zum Einführen des Ausgangsbrennstoffes in den Reformierkatalysator,
eine Heizeinrichtung zur Erwärmung des Reformierkatalysators,
eine Lufteinführeinrichtung zum Einführen von Luft in den Reformierkatalysator,
eine Temperaturerfassungseinrichtung, zur Erfassung der Temperatur des Reformierkatalysators
eine Kontrolleinrichtung zur Verringerung der Menge des Ausgangsbrennstoffes, welcher in der Ausgangsbrennstoffeinführeinrichtung eingeführt wird, und Durchführen, bevor die von der Temperaturerfassungseinrichtung erfasste Temperatur auf eine ein unreformiertes Gas erzeugende Temperatur fällt, wenigstens einer Kontrolle aus der Kontrolle über die Heizeinrichtung zur Erwärmung des Reformierkatalysators und der Kontrolle über die Lufteinführeinrichtung zum Einführen von Luft in den Reformierkatalysator, beim Beenden der Stromerzeugung in einer Brennstoffzelle.

2. Reformersystem nach Anspruch 1, wobei die Kontrolleinrichtung die Heizeinrichtung regelt, um die Heizmenge des Reformierkatalysators zu ändern, abhängig von der Verringerung der Menge des Ausgangsbrennstoffes, welche durch die Ausgangsbrennstoffeinführeinrichtung eingeführt wird.

3. Reformersystem nach Anspruch 1, wobei die Kontrolleinrichtung die Lufteinführeinrichtung regelt, um die Einführmenge an Luft abhängig von der Verringerung der Menge des Ausgangsbrennstoffes, welche von der Ausgangsbrennstoffeinführeinrichtung eingeführt wird, zu verändern.

4. Reformersystem nach Anspruch 1, wobei die Heizeinrichtung ein Heizer, Brenner oder ein Brennerabgas ist.

5. Reformersystem nach Anspruch 1, wobei die Temperaturerfassungseinrichtung die Temperatur des Reformierkatalysators auf einer zentralen Achsenlinie eines Flussweges des Ausgangsbrennstoffes erfasst, welcher durch die Ausgangsbrennstoffeinführeinrichtung eingeführt wird.

6. Brennstoffzellensystem bereitgestellt mit einem Reformer zur Erzeugung eines reformierten Gases durch Reformieren eines Ausgangsbrennstoffes unter Verwendung eines Reformierkatalysators und mit einer Festoxidbrennstoffzelle unter Verwendung des reformierten Gases als ein Brennstoff, umfassend:
eine Ausgangsbrennstoffeinführeinrichtung zum Einführen des Ausgangsbrennstoffes in den Reformierkatalysator,
eine Heizeinrichtung zur Erwärmung des Reformierkatalysators,
eine Lufteinführeinrichtung zum Einführen von Luft in den Reformierkatalysator,
eine Temperaturerfassungseinrichtung zur Erfassung der Temperatur des Reformierkatalysators, und
eine Kontrolleinrichtung zur Verringerung der Menge des Ausgangsbrennstoffes, welche in die Ausgangsbrennstoffeinführeinrichtung eingeführt wird, und zum Durchführen, bevor die von der Temperaturerfassungseinrichtung erfasste Temperatur auf eine ein unreformiertes Gas erzeugende Temperatur fällt, mindestens einer Kontrolle aus der Kontrolle über die Heizeinrichtung zur Erwärmung des Reformierkatalysators und der Kontrolle über die Lufteinführeinrichtung zum Einführen von Luft in den Reformierkatalysator, beim Beenden der Stromerzeugung in einer Brennstoffzelle.

7. Verfahren zum Betreiben eines Brennstoffzellensystems bereitgestellt mit einem Reformer zur Erzeugung eines reformierten Gases durch Reformieren eines Ausgangsbrennstoffes mit einem Reformierkatalysator und mit einer Festoxidbrennstoffzelle unter Verwendung des reformierten Gases als ein Brennstoff,
wobei bei Beendung der Stromerzeugung in der Brennstoffzelle die Menge des in den Reformierkatalysator eingeführten Ausgangsbrennstoffes verringert ist und wenigstens eines der Erwärmung des Reformierkatalysators und der Einführung von Luft in den Reformierkatalysator durchgeführt wird, bevor die Temperatur des Reformierkatalysators auf eine ein unreformiertes Gas erzeugende Temperatur fällt.

## Revendications

1. Système de reformeur comprenant un reformeur pour générer un gaz reformé utilisé comme combustible d'une pile à combustible à oxyde solide par reformage d'un combustible source à l'aide d'un catalyseur de reformage, comprenant :
un moyen d'introduction de combustible source pour introduire le combustible source dans le catalyseur de reformage,
un moyen de chauffage pour chauffer le catalyseur de reformage,
un moyen d'introduction d'air pour introduire de l'air dans le catalyseur de reformage,
un moyen de détection de température pour détecter la température du catalyseur de reformage,
un moyen de commande pour réduire la quantité de combustible source introduit par le moyen d'introduction de combustible source et pour effectuer, avant que la température détectée par le moyen de détection de température tombe à une température de génération de gaz non reformé, au moins une de la commande du moyen de chauffage pour chauffer le catalyseur de reformage et de la commande du moyen d'introduction d'air pour introduire de l'air dans le catalyseur de reformage, à l'arrêt de la génération d'énergie dans une cellule à combustible.

2. Système de reformeur selon la revendication 1, dans lequel le moyen de commande ordonne au moyen de chauffage de changer la quantité de chauffage fournie au catalyseur de reformage en fonction de la réduction de la quantité de combustible source introduit par le moyen d'introduction de combustible source.

3. Système de reformeur selon la revendication 1, dans lequel le moyen de commande ordonne au moyen d'introduction d'air de changer la quantité d'air en fonction de la réduction de la quantité de combustible source introduit par le moyen d'introduction de combustible source.

4. Système de reformeur selon la revendication 1, dans lequel le moyen de chauffage est un élément chauffant, un brûleur ou un gaz d'échappement d'un brûleur.

5. Système de reformeur selon la revendication 1, dans lequel le moyen de détection de température détecte la température du catalyseur de reformage sur une ligne axiale centrale d'un trajet d'écoulement du combustible source introduit par le moyen d'introduction de combustible source.

6. Système de pile à combustible comprenant un reformeur pour générer un gaz reformé par reformage d'un combustible source à l'aide d'un catalyseur de reformage et une pile à combustible à oxyde solide utilisant le gaz reformé comme combustible, comprenant :
un moyen d'introduction de combustible source pour introduire le combustible source dans le catalyseur de reformage,
un moyen de chauffage pour chauffer le catalyseur de reformage,
un moyen d'introduction d'air pour introduire de l'air dans le catalyseur de reformage,
un moyen de détection de température pour détecter la température du catalyseur de reformage, et
un moyen de commande pour réduire la quantité de combustible source introduit par le moyen d'introduction de combustible source et pour effectuer, avant que la température détectée par le moyen de détection de température tombe à une température de génération de gaz non reformé, au moins une de la commande du moyen de chauffage pour chauffer le catalyseur de reformage et de la commande du moyen d'introduction d'air pour introduire de l'air dans le catalyseur de reformage, à l'arrêt de la génération d'énergie dans une cellule à combustible.

7. Procédé pour faire fonctionner un système de pile à combustible comprenant un reformeur pour générer un gaz reformé par reformage d'un combustible source par un catalyseur de reformage et une pile à combustible à oxyde solide utilisant le gaz reformé comme combustible,
dans lequel, à l'arrêt de la génération d'énergie dans la cellule à combustible, la quantité de combustible source introduite dans le catalyseur de reformage est réduite et au moins un du chauffage du catalyseur de reformage et de l'introduction d'air dans le catalyseur de reformage est effectué avant que la température du catalyseur de reformage tombe à une température de génération de gaz non reformé.
